# EUROPEAN PATENT SPECIFICATION

(11) **EP 3 087 567 B1**
(45) Date of publication and mention of the grant of the patent: **20.03.2019**
(21) Application number: 14873674.7
(22) Date of filing: 24.10.2014
(51) Int. Cl.: G21C 9/02, G21C 7/08, G21D 3/04

(54) **ACTUATING A NUCLEAR REACTOR SAFETY DEVICE**
BETÄTIGUNG EINER SICHERHEITSVORRICHTUNG EINES KERNREAKTORS
ACTIONNEMENT DE DISPOSITIF DE SÉCURITÉ DE RÉACTEUR NUCLÉAIRE

(30) Priority: 26.12.2013 US 201361921041 P; 08.08.2014 US 201414455348
(43) Date of publication of application: 02.11.2016
(73) Proprietor: NuScale Power, LLC, Corvallis, OR 97330 (US)
(72) Inventor: HOUGH, Ted, Corvallis, Oregon 97330 (US); ABB, Aaron, Corvallis, Oregon 97330 (US); BRANAM, Tim, Corvallis, Oregon 97330 (US)
(74) Representative: Mewburn Ellis LLP
(86) International application number: PCT/US2014/062105
(87) International publication number: WO 2015/099877

(56) References cited:
- EP-A1- 0 781 451
- JP-A- 2001 099 974
- JP-A- 2002 333 494
- KR-A- 20010 055 075
- KR-A- 20010 055 075
- US-A1- 2004 136 487
- US-A1- 2005 201 507
- US-A1- 2009 252 272
- US-A1- 2012 148 005
- US-A1- 2012 148 005

## Description

### CROSS-REFERENCE TO RELATED APPLICATIONS

This application claims priority to U.S. Provisional Patent Application Serial No. 61/921,041, filed December 26, 2013, entitled "Shunt Trip Actuator," and U.S. Patent Application Serial No. 14/455,348, filed August 8, 2014, entitled "Actuating a Nuclear Reactor Safety device,".

### TECHNICAL BACKGROUND

This disclosure describes a protective device for a nuclear reactor system.

### BACKGROUND

Nuclear reactor systems may be designed with various safety systems. For instance, nuclear reactor systems may include reactor protection systems designed to remotely cause a rapid shutdown of one or more reactors (e.g., SCRAM) if abnormal operating conditions are detected. In some configurations the reactor protection system may be configured to trigger a remote trip on a reactor trip breaker to initiate a rapid reactor shutdown. Further, remote trip devices may be powered by an active power source, which may not be available in a reactor emergency. For instance, an emergency situation may arise, in which, the active power source that powers a reactor trip breaker's remote trip device is lost (e.g., due to equipment malfunction, fire, etc.). If the remote trip device's active power source is lost, the remote trip device may not trip the reactor trip breaker if a reactor trip signal is subsequently received. Thus, the loss of power to the remote trip device reduces the reliability of the reactor protection system and the places nuclear reactor system in a potentially dangerous posture.
US patent application, publication number US 2012/148005 A1 describes a reactor shutdown system. Korean patent application, publication number KR 2001 0055075 A describes a setting circuit for reed switch position transducer. US patent application, publication number US 2004/136487A1 describes a digital reactor protection system for preventing common-mode failures. US patent application, publication number US 2005/201507 A1 describes a nuclear power plant, a method of replacement of a nuclear power plant, and method of operating a nuclear power plant. European patent application, publication number EP 0 781 451 A1 describes a reactor protection system.

### SUMMARY

The present invention provides a nuclear reactor trip apparatus includes a remote circuit breaker trip device operatively connected to a reactor trip breaker to release a control rod into a nuclear reactor core; an active power source electrically coupled to energize the remote circuit breaker trip device; a passive power source electrically coupled to energize the remote circuit breaker trip device based on a loss of the active power source; a local circuit breaker trip device operatively connected to the reactor trip breaker including a sensor to trigger the local circuit breaker trip device upon sensing a predefined condition; and a first logic device (320) comprising a first terminal electrically coupled to the remote circuit breaker trip device, and a second terminal electrically coupled to both the active power source and the passive power source.

In a first aspect combinable with the present invention, the passive power source includes at least one of a capacitor or a battery.

In a second aspect, the remote circuit breaker trip device includes a shunt trip coil.

In a third aspect, the local circuit breaker trip device includes an under voltage trip assembly.

In a fourth aspect, the logic device is communicably coupled to a reactor protection system.

In a fifth aspect, the nuclear reactor trip apparatus includes a second logic device having a first terminal electrically coupled to the remote circuit breaker trip device, and a second terminal electrically coupled to the passive power source.

In a sixth aspect combinable with the previous aspect, the first logic device and the second logic device are communicably coupled to a reactor protection system.

In a seventh aspect combinable with the previous aspect, the nuclear reactor trip includes a first diode electrically coupled between the active power source and the remote circuit breaker trip device and a second diode electrically coupled between the passive power source and the remote circuit breaker trip device.

In an eighth aspect, the predefined condition is a loss of voltage condition.

Various implementations according to the present disclosure may also yield one, some, or all of the following advantages. For example, the implementations described may increase the reliability of a reactor trip breaker's remote trip and, by extension, the reliability of a reactor protection system during a reactor emergency. In addition, the implementations described may ensure that a backup power supply for a reactor trip breaker remote trip is maintained at an optimal state of charge.

The details of one or more implementations of the subject matter of this disclosure are set forth in the accompanying drawings and the description below. Other features, implementations, and advantages of the subject matter will become apparent from the description, the drawings, and the claims.

### DESCRIPTION OF DRAWINGS

FIG. 1A illustrates a block diagram of an example implementation of a nuclear power system that includes at least one nuclear power reactor and an electrical power distribution system;
FIG. 1B illustrates an example of a nuclear power system that includes at least one nuclear power reactor;
FIG. 2 illustrates an example implementation of a nuclear reactor control rod drive system;
FIGS. 3A and 3B illustrate circuit diagrams of exemplary implementations of a reactor trip breaker remote trip with a passive power source;
FIG. 4 illustrates an example reactor core configuration, including a neutron source;
FIG. 5 illustrates an example reactor shut down system; and
FIG. 6 illustrates an example process for performing a reactor shutdown.

### DETAILED DESCRIPTION

Generally, as referred to herein, an active power source is an AC or DC power source which actively generates power (e.g., in contrast with a stored energy power source). In addition, an active power source, generally, is a power source from which an electrical device is powered under normal operating conditions (e.g., when all electrical power sources in a nuclear reactor plant are functioning properly). Power from an active power source generally originates from a machine based power source (e.g., a generator), and is supplied to an electrical load through one or more electrical busses. In the case of DC electrical devices, an active power source may be power from a machine-based power source that is converted from AC to DC (e.g., by a power rectifier or a motor generator) prior to being supplied to a DC electrical bus and ultimately to an electrical load.

Generally, as referred to herein, a passive power source is a stored energy power source (e.g., a battery, a capacitor, or an uninterruptable power supply (UPS)). A passive power source, generally, serves as a backup electrical power supply for an electrical device.

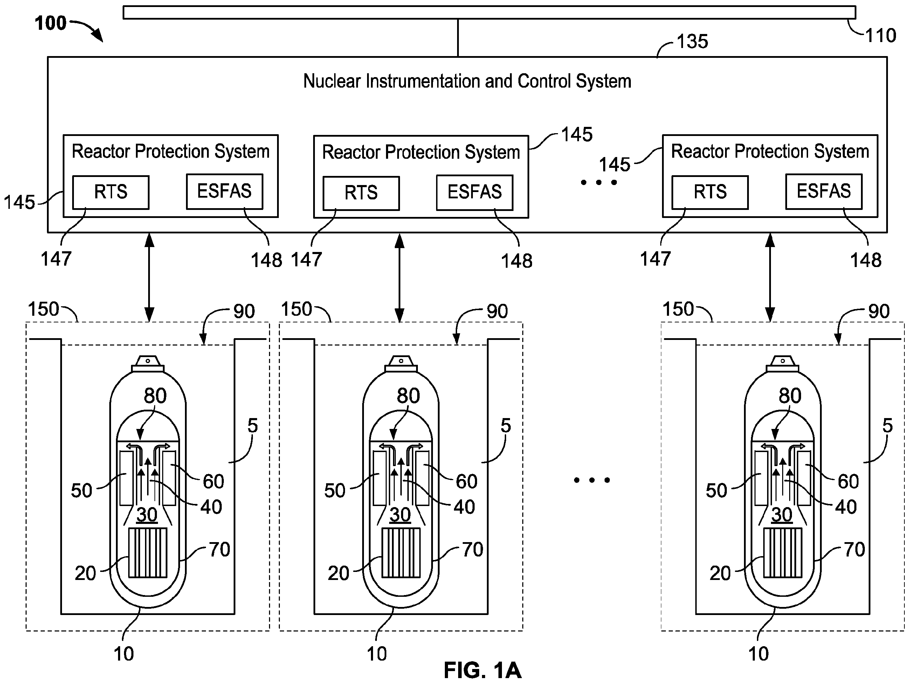

FIG. 1A illustrates an example implementation of a nuclear power system 100 that includes multiple nuclear reactor systems 150 and an electrical power distribution system. In some implementations, the system 100 may provide for a reactor protection system (RPS) that is operable to automatically cause a rapid reactor shutdown remotely.

In FIG. 1A, the example system 100 includes multiple nuclear reactor systems 150 and a nuclear instrumentation and control (I&C) system 135. Although only three nuclear reactor systems 150 are shown in this example, there may be fewer or more systems 150 that are included within or coupled to the nuclear power system 100 (e.g., 6, 9, 12, or otherwise). In one preferred implementation, there may be twelve nuclear reactor systems 150 included within the system 100, with one or more of the nuclear reactor systems 150 including a modular, light-water reactor as further described below.

With respect to each nuclear reactor system 150, a reactor core 20 is positioned at a bottom portion of a cylinder-shaped or capsule-shaped reactor vessel 70. Reactor core 20 includes a quantity of fissile material that produces a controlled reaction that may occur over a period of perhaps several years or longer. Although not shown explicitly in FIG. 1A, control rods may be employed to control the rate of fission within reactor core 20. Control rods may include silver, indium, cadmium, boron, cobalt, hafnium, dysprosium, gadolinium, samarium, erbium, and europium, or their alloys and compounds. However, these are merely a few of many possible control rod materials. In nuclear reactors designed with passive operating systems, the laws of physics are employed to ensure that safe operation of the nuclear reactor is maintained during normal operation or even in an emergency condition without operator intervention or supervision, at least for some predefined period of time.

In example implementations, a cylinder-shaped or capsule-shaped containment vessel 10 surrounds reactor vessel 70 and is partially or completely submerged in a reactor pool, such as below waterline 90, within reactor bay 5. The volume between reactor vessel 70 and containment vessel 10 may be partially or completely evacuated to reduce heat transfer from reactor vessel 70 to the reactor pool. However, in other implementations, the volume between reactor vessel 70 and containment vessel 10 may be at least partially filled with a gas and/or a liquid that increases heat transfer between the reactor and containment vessels. Containment vessel 10 may rest on a skirt (not shown) at the base of reactor bay 5.

In an example implementation, reactor core 20 is submerged within a liquid, such as water, which may include boron or other additive, which rises into channel 30 after making contact with a surface of the reactor core. In FIG. 1A, the upward motion of heated coolant is represented by arrows 40 within channel 30. The coolant travels over the top of heat exchangers 50 and 60 and is drawn downward by way of convection along the inner walls of reactor vessel 70 thus allowing the coolant to impart heat to heat exchangers 50 and 60. After reaching a bottom portion of the reactor vessel, contact with reactor core 20 results in heating the coolant, which again rises through channel 30.

Although heat exchangers 50 and 60 are shown as two distinct elements in FIG. 1A, heat exchangers 50 and 60 may represent any number of helical coils that wrap around at least a portion of channel 30. In another implementation, a different number of helical coils may wrap around channel 30 in an opposite direction, in which, for example, a first helical coil wraps helically in a counterclockwise direction, while a second helical coil wraps helically in a clockwise direction. However, nothing prevents the use of differently-configured and/or differently-oriented heat exchangers and implementations are not limited in this regard. Further, although a water line 80 is shown as being positioned just above upper portions of heat exchangers 50 and 60, in other implementations, reactor vessel 70 may include lesser or greater amounts of water.

In FIG. 1A, normal operation of the nuclear reactor module proceeds in a manner wherein heated coolant rises through channel 30 and makes contact with heat exchangers 50 and 60. After contacting heat exchangers 50 and 60, the coolant sinks towards the bottom of reactor vessel 90 in a manner that induces a thermal siphoning process. In the example of FIG. 1A, coolant within reactor vessel 70 remains at a pressure above atmospheric pressure, thus allowing the coolant to maintain a high temperature without vaporizing (e.g., boiling).

As coolant within heat exchangers 50 and 60 increases in temperature, the coolant may begin to boil. As the coolant within heat exchangers 50 and 60 begins to boil, vaporized coolant, such as steam, may be used to drive one or more turbines that convert the thermal potential energy of steam into electrical energy. After condensing, coolant is returned to locations near the base of heat exchangers 50 and 60.

During normal operation of the reactor module of FIG. 1A, various performance parameters of the illustrated nuclear power system 150 may be monitored by way of sensors, e.g., of the I&C system 135, positioned at various locations within the module, and coupled with communication channels to an interface panel of the I&C system 135. Sensors within the reactor module may measure reactor system temperatures, reactor system pressures, containment vessel pressure, reactor primary and/or secondary coolant levels, reactor core neutron flux, and/or reactor core neutron fluence. Signals that represent these measurements may be reported external to the reactor module by way of a conduit to a reactor bay interface panel (not shown).

One or more of the components and sensors of each nuclear reactor system 150 may be critical loads, such as, for example, active ESF loads such as containment isolation valves, decay heat removal (DHR) valves, other actuatable valves and equipment, as well as sensors. In some implementations, such ESF components may be designed to fail to their safety position upon loss of control power or motive power.

Generally, the illustrated I&C system 135 provides initiating signals (e.g., automatic), automatic and manual control signals, and monitoring and indication displays to prevent or mitigate the consequences of fault conditions and/or failed components in the system 100. The I&C system 135 provides normal reactor controls and protection against unsafe reactor operation of the nuclear power systems 150 during steady state and transient power operation. During normal operation, instrumentation measures various process parameters and transmits the signals to the control systems of I&C system 135. During abnormal operation and accident conditions, the instrumentation transmits signals to portions of the I&C system 135 (e.g., a reactor trip system (RTS) 147 and engineered safety features actuation system (ESFAS) 148 (e.g., for mitigating the effects of an accident) that are part of a RPS 145) to initiate protective actions based on predetermined set points.

The illustrated RPS 145, generally, initiates safety actions to mitigate consequences of design basis events. The RPS 145, generally, includes all equipment (including hardware, software, and firmware) from sensors to the final actuation devices (power sources, sensors, signal conditioners, initiation circuits, logic, bypasses, control boards, interconnections, and actuation devices) required to initiate reactor shutdown.

The RPS 145, in the example implementation, includes the RTS 147 and the ESFAS 148. The RTS 147, in some implementations, includes four independent separation groups (e.g., a physical grouping of process channels with the same Class-lE electrical channel designation (A, B, C, or D)), which is provided with separate and independent power feeds and process instrumentation transmitters, and each of which groups is physically and electrically independent of the other groups) with independent measurement channels to monitor plant parameters that can be utilized to generate a reactor trip. Each measurement channel trips when the parameter exceeds a predetermined set point. The coincident logic of the RTS 147 may be designed so that no single failure can prevent a reactor trip when required, and no failure in a single measurement channel can generate an unnecessary reactor trip. (Class 1E is a regulatory scheme under IEEE Std. 308-2001, section 3.7, endorsed by RG 1.32, which defines a safety classification of the electric equipment and systems that are essential to emergency reactor shutdown, containment isolation, reactor core cooling, and containment and reactor heat removal, or that are otherwise essential in preventing significant release of radioactive material into the environment.)

In some implementations, the RPS monitors various nuclear reactor system parameters to detect an abnormal or emergency condition that requires one or more reactors to be shutdown. Further, in some implementations, the RPS communicates a trip signal to remote trip device(s) associated with one or more reactor trip breakers (RTBs). The remote trip device(s) trip their associated RTBs causing the reactor's control rods to be inserted into the reactor core, thereby, rapidly shutting down the reactor. Further, in some implementations, the remote trip device(s) include both active and passive power sources, which may increase the reliability of the RPS by maintaining power to the remote trip device in the event that one of the power sources is lost during an emergency.

System 100 may include four echelons of defense, e.g., specific applications of the principle of defense-in-depth to the arrangement of instrumentation and control systems attached to a nuclear reactor for the purpose of operating the reactor or shutting it down and cooling it, as defined in NUREG/CR-6303. Specifically, the four echelons are a control system, a reactor trip or scram system, an ESFAS, and a monitoring and indicator system.

The reactor trip system echelon, typically, includes the RTS 147, e.g., safety equipment designed to reduce reactor core reactivity rapidly in response to an uncontrolled excursion. This echelon typically consists of instrumentation for detecting potential or actual excursions, equipment and processes for rapidly and completely inserting the reactor control rods, and may also include certain chemical neutron moderation systems (e.g., boron injection).

In addition to including the four echelons of defense, system 100 includes multiple levels of diversity. Specifically, I&C diversity is a principle of measuring variables or providing actuation means, using different technology, logic or algorithms, to provide diverse ways of responding to postulated plant conditions.

In addition, an electrical power system 110 may provide AC and DC power to all of the electrical loads of the nuclear reactor systems 150. For example, AC power (e.g., 120 VAC, 1 phase, 60 Hz) may be provided to the nuclear reactor systems 150 through one or more AC busses. The AC busses may be divided in to critical and non-critical AC busses. The critical AC busses, may supply AC power to critical loads (e.g., ESF loads). AC power may also be provided to non-critical loads of the nuclear reactor systems 150 through one or more non-critical AC busses. DC power (e.g., 125 VDC) may be provided to the nuclear reactor systems 150 through one or more AC busses.

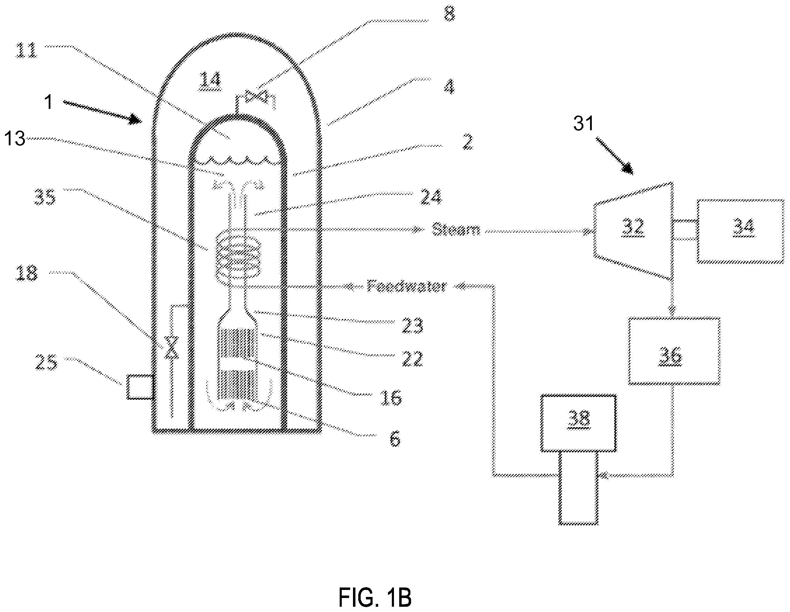

Turning briefly to FIG. 1B, this figure illustrates an example of a nuclear power system that includes at least one nuclear reactor module 1. The nuclear reactor module 1 comprises a reactor core 6 surrounded by a reactor vessel 2. Coolant 13 in the reactor vessel 2 surrounds the reactor core 6. The reactor core 6 may be located in a shroud 22 which surrounds reactor core 6 about its sides. When coolant 13 is heated by reactor core 6 as a result of fission events, coolant 13 may be directed from shroud 22 up into an annulus 23 located above reactor core 6, and out of a riser 24. This may result in additional coolant 13 being drawn into shroud 22 15 to be heated in turn by reactor core 6, which draws yet more coolant 13 into the shroud 22. The coolant 13 that emerges from riser 24 may be cooled down and directed towards the outside of the reactor vessel 2 and then returned to the bottom of the reactor vessel 2 through natural circulation. Pressurized vapor 11 (e.g., steam) may be produced in the reactor vessel 2 as coolant 13 is heated.

A heat exchanger 35 may be configured to circulate feedwater and/or steam in a secondary cooling system 31 in order to generate electricity with a turbine 32 and a generator 34. In some examples, the feedwater passes through the heat exchanger 35 and may become super-heated steam. The secondary cooling system 31 may include a condenser 36 and a feedwater pump 38. In some examples, the feedwater and/or steam in the secondary cooling 25 system 31 are kept isolated from the coolant 13 in the reactor vessel 2, such that they are not allowed to mix or come into direct contact with each other.

Reactor vessel 2 may be surrounded by a containment vessel 4. In some examples, containment vessel 4 may be placed in a pool of water, for example as located below ground level. Containment vessel 4 may be configured to prohibit the release of coolant 13 associated with reactor vessel 2 to escape outside of containment vessel 4 and/or into the surrounding environment. In an emergency situation, vapor 11 may be vented from the reactor vessel 2 through a flow limiter 8 into containment vessel 4, and/or coolant 13 may be released through a blow down valve 18. The rate of release of vapor 11 and/or coolant 13 into containment vessel 4 may vary according to the pressure within reactor vessel 2. In some examples, a decay heat associated with reactor core 6 may be removed, at least in part, through a combination of condensation of vapor 11 on the inner walls of containment vessel 4 and/or by the suppression of coolant 13 released through blow down valve 18.

Containment vessel 4 may be approximately cylindrical in shape. In some examples, containment vessel 4 may have one or more ellipsoidal, domed, or spherical ends. Containment vessel 4 may be welded or otherwise sealed to the environment, such that liquids and/or gases are not allowed to escape from, or enter into, containment vessel 4. In various examples, reactor vessel 2 and/or containment vessel 4 may be bottom supported, top supported, supported about its center, or any combination thereof.

An inner surface of reactor vessel 2 may be exposed to a wet environment comprising coolant 13 and/or vapor 11, and an outer surface of reactor vessel 2 may be exposed to a substantially dry environment. The reactor vessel 2 may comprise and/or be made of stainless steel, carbon steel, other types of materials or composites, or any combination thereof. Additionally, reactor vessel 2 may include cladding and/or insulation.

Containment vessel 4 may substantially surround the reactor vessel 2 within a containment region 14. Containment region 14 may comprise a dry, voided, and/or gaseous environment in some examples and/or modes of operation. Containment region 14 may comprise an amount of air, a noble gas such as Argonne, other types of gases, or any combination thereof. In some examples, containment region 14 may be maintained at or below atmospheric pressure, for example at a partial vacuum. In other examples, 20 containment region 14 may be maintained at a substantially complete vacuum. Any gas or gasses in containment vessel 2 may be evacuated and/or removed prior to operation of reactor module 1.

Certain gases may be considered non-condensable under operating pressures that are experienced within a nuclear reactor system. These non-condensable gases may include hydrogen and oxygen, for example. During an emergency operation, steam may chemically react with the fuel rods to produce a high level of hydrogen. When hydrogen mixes with air or oxygen, this may create a combustible mixture. By removing a substantial portion of the air or oxygen from containment vessel 4, the amount of hydrogen and oxygen that is allowed to mix may be minimized or eliminated.

Any air or other gases that reside in containment region 14 may be removed or voided when an emergency condition is detected. The gases that are voided or evacuated from the containment region 14 may comprise non-condensable gases and/or condensable gases. Condensable gases may include any steam that is vented into containment region 14.

During an emergency operation, whereas vapor and/or steam may be vented into containment region 14, only a negligible amount of non-condensable gas (such as hydrogen) may be vented or released into containment region 14. It may be possible to assume from a practical standpoint, that substantially no non-condensable gases are released into containment region 14 together with the vapor. Accordingly, in some examples, substantially no hydrogen gas is vented into the containment region 14 together with the vapor, such that the levels and/or amounts of hydrogen together with any oxygen that may exist within the containment region 14 are maintained at a non-combustible level. Additionally, this noncombustible level of oxygen-hydrogen mixture may be maintained without the use of hydrogen recombiners.

Removal of convective heat transfer in air occurs generally at about 50 torr (50 mm HG) of absolute pressure, however a reduction in convective heat transfer may be observed at approximately 300 torr (300 mm HG) of absolute pressure. In some examples, containment region 14 may be provided with, or maintained below, a pressure of 300 torr (300 mm HG). In other examples, containment region 14 may be provided with, or maintained below, a pressure of 50 torr (50 mm HG). In some examples, containment region 14 may be provided with and/or maintained at a pressure level which substantially inhibits all convective and/or conductive heat transfer between reactor vessel 2 and containment vessel 4. A complete or partial vacuum may be provided and/or maintained by operating a vacuum pump, steam-air jet ejector, other types of evacuation devices, or any combination thereof.

By maintaining containment region 14 in a vacuum or partial vacuum, moisture within containment region 14 may be eliminated, thereby protecting electrical and mechanical components from corrosion or failure. Additionally, the vacuum or partial vacuum may operate to draw or pull coolant into the containment region 14 during an emergency operation (e.g., over-pressurization or over-heating event) without the use of a separate pump or elevated holding tank. The vacuum or partial vacuum may also operate to provide a way to flood or fill containment region 14 with coolant 13 during a refueling process.

Flow limiter 8 may be mounted on reactor vessel 2 for venting the coolant 13 and/or vapor 11 into containment vessel 4 during an emergency operation. Flow limiter 8 may be connected or mounted directly to an outer wall of reactor vessel 2, without any intervening structures such as piping or connections. In some examples, flow limiter 8 may be welded directly to reactor vessel 2 to minimize the likelihood of any leaking or structural failures. Flow limiter 8 may comprise a Venturi flow valve configured to release vapor 11 into the containment vessel 4 at a controlled rate. The condensation of vapor 11 may reduce pressure in containment vessel 4 at approximately the same rate that the vented vapor 11 adds pressure to containment vessel 4.

Coolant 13 that is released as vapor 11 into containment vessel 4 may condense on an inner surface of containment vessel 4 as a liquid, such as water. The condensation of the vapor 11 may cause the pressure in containment vessel 4 to decrease, as the vapor 11 is transformed back into liquid coolant. A sufficient amount of heat may be removed through the condensation of vapor 11 on the inner surface of containment vessel 4 to control the removal of decay heat from reactor core 6.

The condensed coolant 13 may descend to the bottom of containment vessel 4 and collects as a pool of liquid. As more vapor 11 condenses on the inner surface of containment vessel 4, the level of coolant 13 within containment vessel 4 may gradually rise. Heat stored in the vapor 11 and/or coolant 13 may be transferred through the walls of the containment vessel 4 to the surrounding environment. By substantially removing gases from the containment region 14, the initial rate of condensation of vapor 11 on the inner surface of containment vessel 4 may be increased by virtue of the evacuated gases. Gases that would normally accumulate at the inner surface of containment vessel 4 to inhibit the condensation of coolant 13 are either at such low levels or are swept from the inner surface due to the natural convection of the coolant 13, that the rate of condensation may be maximized. Increasing the rate of condensation may in turn increase the rate of heat transfer through containment vessel 4.

A vacuum within the containment region 14 may act as a type of thermal insulation during normal operation of the reactor module, thereby retaining heat and energy in reactor vessel 2 where it can continue to be utilized for power generation. As a result, less material insulation may be used in the design of reactor vessel 2. In some examples, a reflective insulation may be used instead of, or in addition to, conventional thermal insulations. Reflective insulation may be included on one or both of reactor vessel 2 or containment vessel 4. The reflective insulation may be more resistant to water damage compared to conventional thermal insulation. In addition, reflective insulation may not impede a transfer of heat from reactor vessel 2 as much as the conventional thermal insulation during an emergency condition. For example, an exterior stainless steel surface of reactor vessel 2 may come into direct contact with any coolant located in containment region 14.

A neutron detection device 25 is shown mounted to an exterior of containment vessel 4. Neutron detection device 25 may be positioned at an approximate core elevation. Neutron detection device 25 may be configured to detect neutrons generated at or near reactor core 6. The detected neutrons may comprise fast neutrons, slow neutrons, thermalized neutrons, or any combination thereof. In some examples, neutron detection device 25 may be separated from a neutron source by containment region 14. Neutrons generated by and/or emitted from the neutron source may pass through containment region 14 prior to being detected by neutron detection device 25.

A reactor shut down system may have one or more mechanisms, systems, apparatus, devices, methods, operations, modes, and/or means for removing and/or reducing power in the reactor core 6. For example, the reactor shut down system may be configured to insert one or more control rods 16, or allow the control rods 16 to be inserted, into the reactor core 6. The control rods 16 may be inserted into the reactor core 6 as part of an operation to shut down the reactor module 1 for maintenance, refueling, inspection, certification, transport, a high-pressure and/or high temperature reading in the reactor vessel, a power surge, an elevated level of criticality and/or number of detected fission events, an emergency operation, other types of operations, or any combination thereof. In some examples, the reactor shut down system may be configured to insert the control rods 16 in response to information provided by neutron detection device 25.

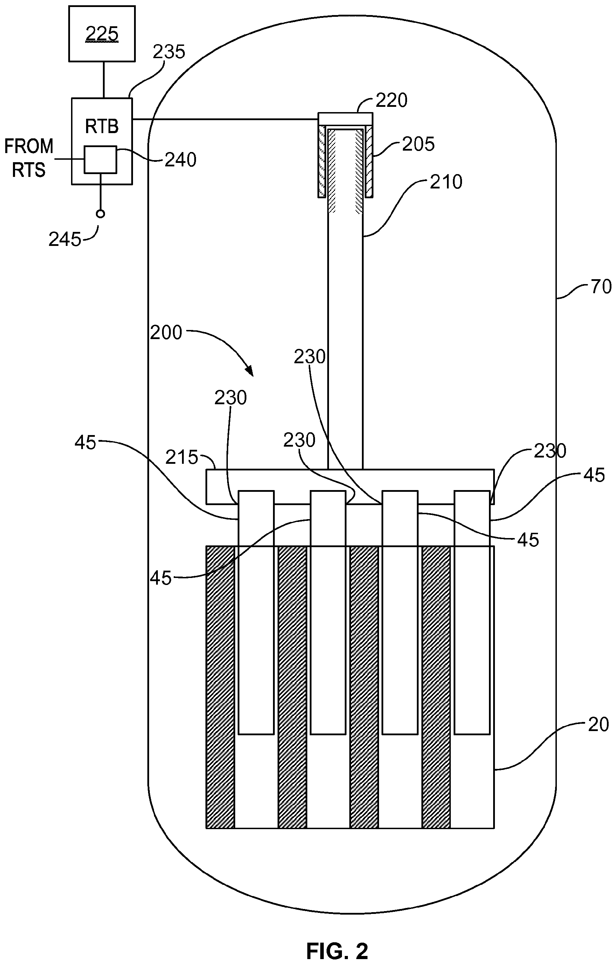

FIG. 2 illustrates an example implementation of a nuclear reactor control rod drive system 200, illustrated in a portion of a nuclear reactor system (e.g., nuclear reactor system 100). As illustrated, the control rod drive system 200 includes a drive mechanism 205, a drive actuator 220, and a drive shaft 210. Although a single drive mechanism 205, drive actuator 220, and drive shaft 210 are shown in FIG. 2, a nuclear reactor control rod drive system 200 for a nuclear reactor may have multiple drive mechanisms 205, drive actuators 220, and drive shafts 210. The drive system 200, as shown, is illustrated mounted in the reactor vessel 70 and is coupled to control rods 45. The control rods 45, in this figure, are illustrated as inserted, at least partially, into the core 20 of the nuclear reactor system.

In the illustrated implementation, the actuator 220 of the drive mechanism 205 is communicably coupled to a control system 225 through reactor trip breakers (RTBs) 235. Generally, the control system 225 may receive information (e.g., temperature, pressure, flux, valve status, pump status, or other information) from one or more sensors of the nuclear reactor system 100 and, based on such information, control the actuator 220 to energize or deenergize the drive mechanism 205. In some implementations, the control system 225 may be a main controller (e.g., processor-based electronic device or other electronic controller) of the nuclear reactor system. For example, the main controller may be a master controller communicably coupled to slave controllers at the respective control valves. In some implementations, the control system 225 may be a Proportional-Integral-Derivative (PID) controller, a ASIC (application specific integrated circuit), microprocessor based controller, or any other appropriate controller. In some implementations, the control system 225 may be all or part of a distributed control system.

The illustrated drive mechanism 205 is coupled (e.g., threadingly) to the drive shaft 210 and operable, in response to operation of the actuator 220, to adjust a location of the control rods 45 in the reactor vessel 70 (e.g., within the core 20) by raising or lowering the control rods 45 with the drive shaft 210. In some implementations, the drive mechanism 205 only controls movement of the drive assembly 200 and control rods 45 during normal operation.

In the event of abnormal reactor operating conditions the RTBs 235 may be tripped (i.e., opened) to rapidly shut down a reactor system 150 by securing power to the drive mechanism 205. With power secured to the drive mechanism 205, drive mechanism 205 releases the drive shaft inserting the control rods 45 into the reactor core 20 under the force of gravity, thereby, rapidly reducing core reactivity and shutting down the reactor system 150. In the illustrated implementation, the RTB 235 is represented as a single block component; however, RTB 235 may represent multiple RTBs.

The RTB 235 may be tripped by one of three different methods; a manual trip, a local automatic trip, and a remote trip 240. The local automatic trip is generally an under voltage trip that causes the RTB 235 to open upon loss of power supply voltage (e.g., power from the control system 225 to the drive mechanism 205), and cause the control rods 45 to drop. The manual trip provides a direct trip of the RTB 235. The under voltage trip may include a sensor to monitor power supply voltage and trip the breaker at a predetermined voltage or a predetermined change in voltage of the power supply. For example, the under voltage trip may be a spring loaded mechanical device including a solenoid connected to the power supply side of the RTB 235 and designed to maintain the RTB 235 in the closed position as long as the voltage of the power delivered by the power supply is above a threshold value (e.g., 0V), thereby tripping the RTB 235 upon a loss of voltage.

The remote trip 240, in some implementations, is controlled by the RTS 147 and is powered, under normal conditions (e.g., the remote trip's 240 normal power source), from one or more active power sources 245 (e.g., a DC power bus). The remote trip 240 trips the RTB 235 open when the remote trip 240 receives a trip signal from the RTS 147. Generally, the RPS 145 includes multiple separation groups of sensors and detectors; multiple separation groups of signal conditioning and signal conditioners; multiple separation groups of trip determination; and multiple divisions of RTS voting and RTBs 235. The trip inputs are combined in RTS voting logic so that more than one reactor trip inputs from the trip determinations are required to produce an automatic reactor trip output signal that actuates the remote trip 240 for all or a subset of all the RTBs 235 associated with a respective division.

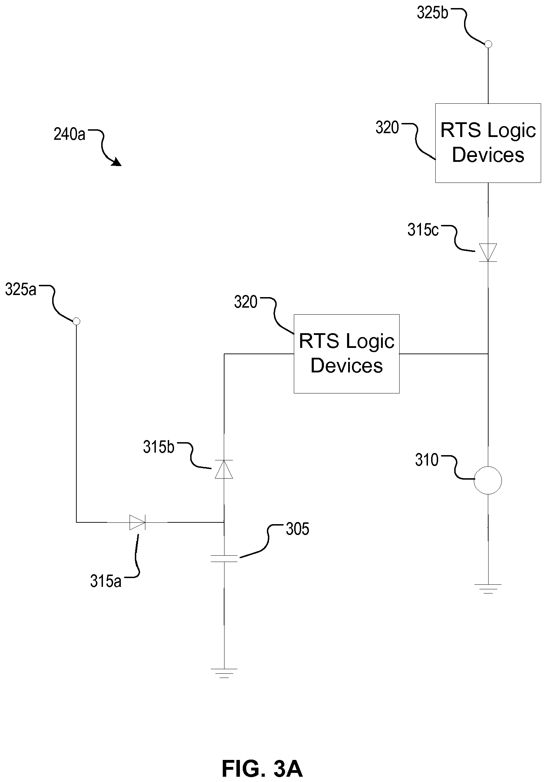

In addition, the remote trip 240 includes a passive power source (e.g., 305 shown in FIGS. 3A-3B). The passive power source increases the reliability of the remote trip 240 and, by extension, the reliability of the RPS 145 during a reactor emergency. For instance, without a passive power source, an emergency situation may arise in which the active power source 245 (e.g., normal power source) that powers the remote trip 240 is lost, but the RTB 235 is not actuated. The loss of power to the remote trip 240 reduces the reliability of the RPS 145 and the places reactor system 150 in potentially dangerous posture. The remote trip 240 will not trip the RTB 235 if a reactor trip signal is received from the RTS 147 due to the loss of active power 245 to the remote trip 240.

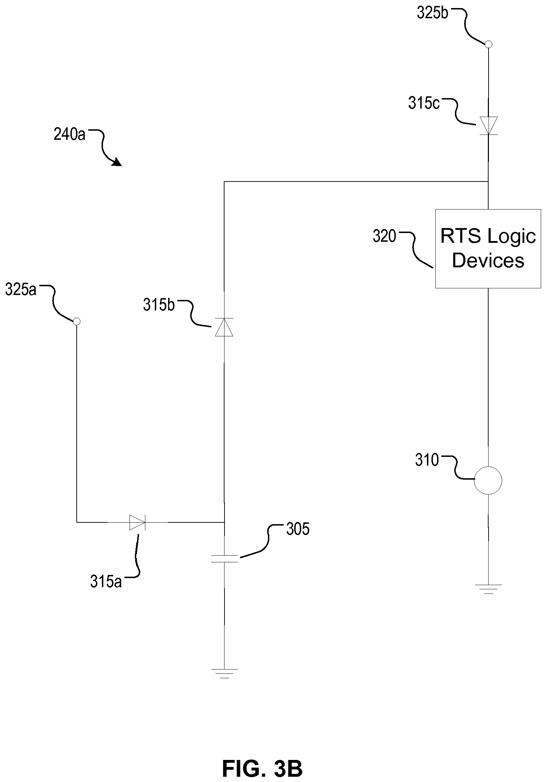

FIGS. 3A and 3B illustrate circuit diagrams of exemplary features of a reactor trip breaker remote trip 240a and 240b with a passive power source. The illustrated RTB remote trip 240 includes a passive power source 305, a shunt trip coil 310, diodes (e.g., any electrical device having asymmetric conductance) 315a-315c, RTS logic devices 320, and active power supply connections 325a and 325b (e.g., for connection to active power source 245). The passive power source 305 serves as a backup source of power for the RTB remote trip 240a and 240b. The passive power source 305 is, generally, a capacitor, but also may be a battery or other stored electrical energy device.

The shunt trip coil 310 is operatively connected to the RTB 235 and when energized causes the RTB to trip open. RTS logic devices 320 are communicably coupled to the RTS 147, and upon receiving a trip signal from RTS 147, energize the shunt trip coil 310. The RTS logic devices 320 are, generally, normally open contactor or a relay. In some implementations, the RTS logic devices may be or contain one or more high power solid state switches, such as, for example, high power transistors such as a MOSFET. Generally, both sets of RTS logic devices 320 operate in tandem, that is, receive the same signals from RTS 147 and both open or close a circuit path to the shunt trip coil 210 synchronously.

In an example operation, and referring to FIG. 3A, prior to receiving a trip signal, RTS devices 320 function as open switches and no (or negligible) current flows through diodes 315b and 315c. Current is permitted to flow from active power supply connection 325a to charge passive power source 305 via diode 315a. Passive power source 305 is then maintained at a peak charge when receiving voltage from 325a (e.g., active power source 245). When RTS logic devices 320 receive a trip signal, the RTS logic devices 320 function as closed switches, thereby allowing current to flow from active power supply connection 325b via diode 315c to shunt trip coil 310, and from active power supply connection 325a via diodes 315a and 315b to shunt trip coil 310.

The energized shunt trip coil 310 causes the RTB 235 to trip open and the control rods 45 to drop. The diodes 315a-315c prevent shorting the power source connected to active power supply connections 325a and 325b by allowing only unidirectional power flow (e.g., away from the connections 325a and 325b). Active power supply connections 325a and 325b are generally connected to the same power source (e.g., active power source 245), however, in some implementations they may be connected to different power sources, in which case, the diodes prevent cross-connecting the two different power sources.

If the RTS logic devices receive a trip signal at a time when no power is available from either active power source connection 325a or 325b (e.g., when active power source 245 has failed), the shunt trip coil 210 is energized by power supplied from passive power source 305. Current flows from passive power source 305 via 315b to the shunt trip coil 310 to trip open the RTB 235. The diodes 315a and 315c prevent loss of the energy stored in passive power source 305 to circuitry outside of the RTB remote trip 240a and ensure that all (or a substantial amount) of the energy is transferred to the shunt trip coil 305. In other words, the diodes 315a and 315c serve to electrically decouple the active power source (e.g., connection 325a or 325b) from the passive power source 305 and the shunt trip coil 310 in the event that the active power source is lost. This ensures that the energy stored in the passive power source 305 is not transferred to other electrical components connected to an electrical power bus associated with the active power source.

FIG. 3B illustrates an alternative implementation of a RTB remote trip 240b with a passive power source 305. RTB remote trip 240b includes only one RTS logic device 320 which controls current flow from both the active power supply connection 325b to the shunt trip coil 310 and from either the active power supply connection 325a or the passive power source 305 to the shunt trip coil.

In this configuration, the diodes 315a-315c may still operate to prevent a short circuit between power sources connected to connections 325a and 325b during normal operation. In the event of a loss of active power to the RTB remote trip 240b, the diodes 315a-315c ensure that all of the energy stored in passive power source 305 is transferred to the shunt trip coil 310 upon a loss of active power by preventing any current flow from the passive power source 305 through connections 325a and 325b. In other words, the diodes 315a and 315b serve to electrically decouple the active power source (e.g., connection 325a or 325b) from the passive power source 305 and the shunt trip coil 310 in the event that the active power source is lost.

This ensures that the energy stored in the passive power source 305 is not transferred to other electrical components connected to an electrical power bus associated with the active power source. The passive power source 305 charging operation for RTB remote trip 240b is identical to that described above with respect to RTB remote trip 240a.

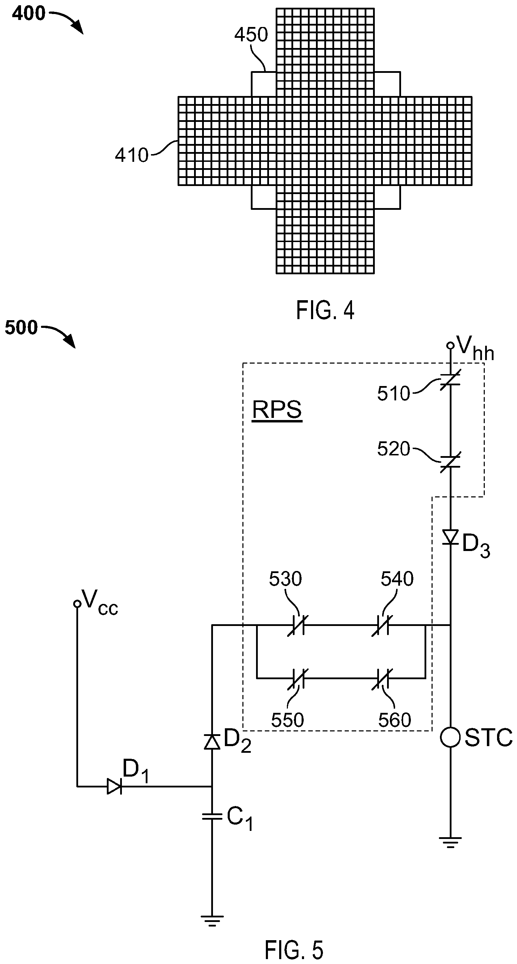

FIG. 4 illustrates an example reactor core configuration 400, including a neutron source 450. Neutron source 450 may comprise a device configured to provide a stable and reliable source of neutrons for the initiation of a nuclear chain reaction, for example when the reactor includes new fuel rods whose neutron flux from spontaneous fission may otherwise be insufficient for purposes of reactor startup. Neutron source 450 may be configured to provide a constant number of neutrons to the nuclear fuel during startup or when restarting the reactor after being shutdown (e.g., for maintenance and/or inspection). In some examples, neutron source 450 may be configured to prevent power excursions during reactor startup.

Neutron source 450 may be positioned so that the neutron flux it produces is detectable by reactor monitoring instrumentation. For example, neutron source 450 may be inserted in regularly spaced positions inside the reactor core, such as in place of one or more fuel rods 410. When the reactor is shutdown, neutron source 450 may be configured to provide signals to the reactor monitoring instrumentation. In some examples, the equilibrium level of neutron flux in a subcritical reactor may be dependent on the strength of neutron source 450. Neutron source 450 may be configured to provide a minimum level of neutron emissions to maintain control over the reactor in a subcritical state, such as during reactor startup.

Control rods and/or fuel rods 410 may be configured to initiate a reactor startup based, at least in part, on the inferred power level of the reactor. One or more of the control rods may be removed from fuel rods 410 during a reactor startup, causing the reactor core to become critical. In some examples, the power level of the reactor may be inferred, at least in part, from the number of neutrons that are emitted from neutron source 450.

FIG. 5 illustrates an example reactor shut down system 500. In some examples, reactor shut down system 500 may comprise a reactor trip breaker (RTB). A power source may be used to provide power to the control rod drive and/or to the RTB to retain one or more control rods in a withdrawn position, e.g., suspended, or at least partially suspended, over a reactor core. Reactor shut down system 500 may comprise two or more mechanisms, systems, apparatus, devices, methods, operations, modes, and/or means for removing power from a control rod drive. The control rod drive may be configured to drive, position, insert and/or withdraw control rods.

Reactor shut down system 500 may be configured to lower, open, release, insert, and/or drop control rods into a reactor core. In a first mode of operation, reactor shut down system 500 may comprise an under-voltage trip assembly (UVTA) that is configured to detect, generate, notify, instruct, and/or receive a loss of voltage and/or a loss of power to the control rod drive and/or to the RTB. In some examples, the loss of voltage and/or power may cause the control rod drive and/or the RTB to open and/or release, such that the control rods may be allowed to drop and/or otherwise be inserted into the reactor core as a result of the force of gravity pulling the control rods down.

In a second mode of operation, reactor shut down system 500 may comprise a shunt trip actuator (STA) and/or a shunt trip coil (STC) that is configured to lower, open, release, insert, and/or drop control rods into the reactor core. The shunt trip coil STC may comprise a breaker and/or a built-in magnetic coil that may be configured to energize and trip the breaker. The shunt trip coil STC may be energized by an external power source.

The shunt trip coil STC may be used as a backup shut down system, such as when the UVTA, the RTB, and/or the control rod drive fails to insert the control rods into the reactor core in response to the loss of voltage and/or power. For example, in response to a detected loss of power during a valid reactor trip condition, e.g., as indicated by a reactor protection system (RPS), the shunt trip coil STC may be actuated to insert the control rods. In some examples, actuation of the shunt trip coil STC may be performed with a passive energy source.

A power storage device, such as capacitor C1, may be used to store energy, e.g., electrical energy. The power storage device may comprise a battery, a capacitor, an ultracapacitor, other types of storage devices, or any combination thereof. In some examples, capacitor C1 may be used to provide the energy to one or more other components, such as shunt trip coil STC, in reactor shut down system 500.

Capacitor C1 may be configured to be charged and/or to retain a charge. For example, the power source may charge capacitor C1 during normal operation of a reactor module. Additionally, capacitor C1 may be configured to retain the charge during a standby mode. In some examples, the power source may be configured to trickle charge capacitor C1 during the standby mode and/or to otherwise ensure that the capacitor C1 maintains a minimum threshold level of stored energy in the event that a loss of power occurs and/or is detected.

The capacitor C1 may be configured to provide an alternative and/or passive source or power to actuate the shunt trip coil STC, such as in response to a loss of normal power to the reactor shut down system 500. The shunt trip coil STC, in response, may be configured to operate the RTB to lower, drop, and/or release the control rods into the reactor core.

Reactor shut down system 500 may comprise an example control circuit associated with one or more diodes, contacts, and/or capacitors that may be configured to provide a passive energy source for reactor shut down operations. Capacitor C1 and shunt trip coil STC are illustrated as being connected to ground. In addition to capacitor C1 and shunt trip coil STC, reactor shut down system 500 may comprise a first diode D1, a second diode D2, and a third diode D3.

First diode D1 may be connected to a first voltage source Vcc. In some examples, capacitor C1 may be charged by first voltage source Vcc via first diode D1. Additionally, capacitor C1 may be discharged through second diode D2. In some examples, capacitor C1 is discharged in response to a loss of power at a second voltage source Vbb.

In some examples, one or both of first diode D1 and third diode D3 may be configured to prohibit and or protect one or more components from the release of the charge stored on capacitor C1. Any charge released from capacitor C1 may instead be directed towards the shunt trip coil STC.

Reactor shut down system 500 may comprise one or more contacts, such as a first contact 510, a second contact 520, a third contact 530, a fourth contact 540, a fifth contact 550, a sixth contact 560, other contacts, or any combination thereof. In some examples, the one or more contacts may comprise normally closed (NC) contacts. Some or all of the contacts may be controlled by the reactor power system RPS. The RPS may be configured to open and/or close the one or more contacts in order to control the charging and/or discharging of the capacitor C1.

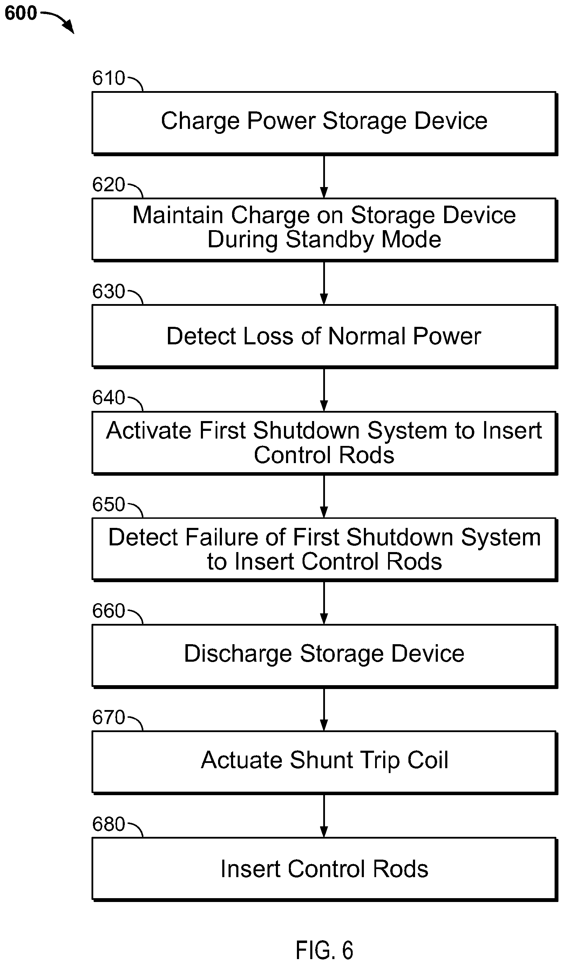

FIG. 6 illustrates an example process 600 for performing a reactor shutdown. At operation 610, a power storage device, such as a capacitor, ultra-capacitor, battery, other storage device, or any combination thereof, may be charged.

At operation 620, the charge on the power storage device may be maintained during a standby mode.

At operation 630, a loss of normal operating power may be detected. In some examples, the loss of operating power may be associated with a power source used to withdraw one or more control rods from a reactor core.

At operation 640, a first shutdown system may be activated to insert the control rods. In some examples, the first shutdown system may be configured to insert the control rods due to a gravitational pull of the control rods into the reactor core.

At operation 650, the reactor shutdown system may detect that the control rods have not been properly and/or fully inserted into the reactor core. For example, the control rods may remain at least partially suspended over the reactor core despite having been released by the first shutdown system at operation 640.

At operation 660, the storage device may be discharged in response to the reactor shutdown system detecting that the control rods were not inserted into the reactor core. In some examples, the charge stored in the storage device may be discharged into a shunt trip coil as part of a second shutdown system.

At operation 670, the shunt trip coil may be actuated and/or powered by the storage device discharge. The shunt trip coil may in turn operate the reactor trip breaker to lower, open, release, insert, and/or drop one or more control rods into the reactor core.

At operation 680, the one or more control rods may be inserted into the reactor core to shut down the reactor.

Particular implementations of the subject matter have been described. Other implementations, alterations, and permutations of the described implementations are within the scope of the following claims as will be apparent to those skilled in the art. For example, the actions recited in the claims can be performed in a different order and still achieve desirable results. Further, the examples provided herein may be described and/or compatible with a pressurized water reactor as well as other types of power systems as described or with some modification. For example, the examples or variations thereof may also be made operable with a boiling water reactor, sodium liquid metal reactor, pebble-bed reactor, or a reactor designed to operate in space, such as in a propulsion system with limited operational space. Other examples may include various nuclear reactor technologies, such as nuclear reactors that employ uranium oxides, uranium hydrides, uranium nitrides, uranium carbides, mixed oxides, and/or other types of radioactive fuel. It should be noted that examples are not limited to any particular type of reactor cooling mechanism, nor to any particular type of fuel employed to produce heat within or associated with a nuclear reactor. Any rates and values described herein are provided by way of example only. Other rates and values may be determined through experimentation such as by construction of full scale or scaled models of a nuclear reactor system.

Accordingly, the above description of example implementations does not define or constrain this disclosure. Other changes, substitutions, and alterations are also possible without departing from the scope of this disclosure.

## Claims

1. A nuclear reactor trip apparatus, comprising:
a remote circuit breaker trip device (240) operatively connected to a reactor trip breaker (235) to release a control rod (45) into a nuclear reactor core (20);
an active power source (245) electrically coupled to energize the remote circuit breaker trip device;
a passive power source (305) electrically coupled to energize the remote circuit breaker trip device based on a loss of the active power source;
a local circuit breaker trip device operatively connected to the reactor trip breaker, the reactor trip breaker including a sensor (135) to trigger the local circuit breaker trip device upon sensing a predefined condition; and
a first logic device (320) comprising a first terminal electrically coupled to the remote circuit breaker trip device, and a second terminal electrically coupled to both the active power source and the passive power source.

2. The nuclear reactor trip apparatus of claim 1, wherein the passive power source (305) comprises at least one of a capacitor or a battery.

3. The nuclear reactor trip apparatus of claim 1, wherein the remote circuit breaker trip device (240) comprises a shunt trip coil (310).

4. The nuclear reactor trip apparatus of claim 1, wherein the local circuit breaker trip device comprises an under voltage trip assembly.

5. The nuclear reactor trip apparatus of claim 1, wherein the logic device is communicably coupled to a reactor protection system (145).

6. The nuclear reactor trip apparatus of claim 1, further comprising:
a second logic device, comprising:
a first terminal electrically coupled to the remote circuit breaker trip device (240), and
a second terminal electrically coupled to the passive power source (305).

7. The nuclear reactor trip apparatus of claim 6, wherein the first logic device (320) and the second logic device are communicably coupled to a reactor protection system (145).

8. The nuclear reactor trip apparatus of claim 7, further comprising:
a first diode electrically coupled between the active power source (245) and the remote circuit breaker trip device; and
a second diode electrically coupled between the passive power source (305) and the remote circuit breaker trip device.

9. The nuclear reactor trip apparatus of claim 1, wherein the predefined condition comprises a loss of voltage condition.

10. The nuclear reactor shut down system of claim 3, wherein the passive power source (305) comprises a capacitor electrically coupled with the shunt trip coil (310).

11. The nuclear reactor shut down system of claim 10, wherein the capacitor is electrically coupled with a second power source (325a) through a first diode (315a), and is electrically coupled with the shunt trip coil (310) through a second diode (315b).

12. The nuclear reactor shut down system of claim 11, wherein the second power source (325a) is configured to charge the capacitor during a normal operation state.

13. The nuclear reactor shut down system of claim 11, wherein the second power source (325a) is configured to trickle charge the capacitor during a standby state.

14. The nuclear reactor shut down system of claim 11, further comprising a first set of one or more contacts electrically coupled between the second diode (315b) and the shunt trip coil (310) to control at least one of discharging or charging of the capacitor to the shunt trip coil.

15. The nuclear reactor shut down system of claim 14, further comprising a second set of one or more contacts electrically coupled between the first power source and the capacitor to control at least one of discharging or charging of the capacitor to the shunt trip coil (310).

## Patentansprüche

1. Kernreaktorauslösevorrichtung, Folgendes umfassend:
eine entfernte Leistungsschalter-Auslösevorrichtung (240), die mit einem Reaktorauslöseschutzschalter (235) wirkverbunden ist, um eine Steuerstange (45) in einen Kernreaktorkern (20) freizugeben;
eine aktive Leistungsquelle (245), die elektrisch verbunden ist, um die entfernte Leistungsschalter-Auslösevorrichtung mit Energie zu versorgen;
eine passive Leistungsquelle (305), die elektrisch verbunden ist, um die entfernte Leistungsschalter-Auslösevorrichtung basierend auf einem Ausfall der aktiven Leistungsquelle mit Energie zu versorgen;
eine lokale Leistungsschalter-Auslösevorrichtung, die mit dem Reaktorauslöseschutzschalter wirkverbunden ist, wobei der Reaktorauslöseschutzschalter einen Sensor (135) zum Auslösen der lokalen Leistungsschalter-Auslösevorrichtung umfasst, wenn er einen vordefinierten Zustand abfühlt; und
eine erste Logikvorrichtung (320), die einen ersten Anschluss, der elektrisch mit der entfernten Leistungsschalter-Auslösevorrichtung verbunden ist, und einen zweiten Anschluss umfasst, der elektrisch sowohl mit der aktiven Leistungsquelle als auch mit der passiven Leistungsquelle verbunden ist.

2. Kernreaktorauslösevorrichtung nach Anspruch 1, wobei die passive Leistungsquelle (305) zumindest eines aus einem Kondensator oder einer Batterie umfasst.

3. Kernreaktorauslösevorrichtung nach Anspruch 1, wobei die entfernte Leistungsschalter-Auslösevorrichtung (240) eine Nebenschlussauslösespule (310) umfasst.

4. Kernreaktorauslösevorrichtung nach Anspruch 1, wobei die lokale Leistungsschalter-Auslösevorrichtung eine Unterspannungs-Auslöseanordnung umfasst.

5. Kernreaktorauslösevorrichtung nach Anspruch 1, wobei die Logikvorrichtung kommunikativ mit einem Reaktorschutzsystem (145) verbunden ist.

6. Kernreaktorauslösevorrichtung nach Anspruch 1, ferner Folgendes umfassend:
eine zweite Logikvorrichtung, umfassend
einen ersten Anschluss, der elektrisch mit der entfernten Leistungsschalter-Auslösevorrichtung (240) verbunden ist, und
einen zweiten Anschluss, der elektrisch mit der passiven Leistungsquelle (305) verbunden ist.

7. Kernreaktorauslösevorrichtung nach Anspruch 6, wobei die erste Logikvorrichtung (320) und die zweite Logikvorrichtung kommunikativ mit einem Reaktorschutzsystem (145) verbunden sind.

8. Kernreaktorauslösevorrichtung nach Anspruch 7, ferner umfassend:
eine erste Diode, die elektrisch zwischen der aktiven Leistungsquelle (245) und der entfernten Leistungsschalter-Auslösevorrichtung geschaltet ist; und
eine zweite Diode, die elektrisch zwischen der passiven Leistungsquelle (305) und der entfernten Leistungsschalter-Auslösevorrichtung geschaltet ist.

9. Kernreaktorauslösevorrichtung nach Anspruch 1, wobei der vordefinierte Zustand einen Spannungsausfallzustand umfasst.

10. Kernreaktorabschaltsystem nach Anspruch 3, wobei die passive Leistungsquelle (305) einen Kondensator umfasst, der elektrisch mit der Nebenschlussauslösespule (310) verbunden ist.

11. Kernreaktorabschaltsystem nach Anspruch 10, wobei der Kondensator über eine erste Diode (315a) elektrisch mit einer zweiten Leistungsquelle (325a) verbunden und über eine zweite Diode (315b) elektrisch mit der Nebenschlussauslösespule (310) verbunden ist.

12. Kernreaktorabschaltsystem nach Anspruch 11, wobei die zweite Leistungsquelle (325a) konfiguriert ist, um den Kondensator während eines Normalbetriebszustands aufzuladen.

13. Kernreaktorabschaltsystem nach Anspruch 11, wobei die zweite Leistungsquelle (325a) konfiguriert ist, um den Kondensator während eines Bereitschaftszustands durch Pufferladung aufzuladen.

14. Kernreaktorabschaltsystem nach Anspruch 11, ferner umfassend einen ersten Satz von einem oder mehreren Kontakten, die elektrisch zwischen der zweiten Diode (315b) und der Nebenschlussauslösespule (310) geschaltet sind, um zumindest eines von Entladen oder Aufladen des Kondensators zur Nebenschlussauslösespule zu steuern.

15. Kernreaktorabschaltsystem nach Anspruch 14, ferner umfassend einen zweiten Satz von einem oder mehreren Kontakten, die elektrisch zwischen der ersten Leistungsquelle und dem Kondensator geschaltet sind, um zumindest eines von Entladen oder Aufladen des Kondensators zur Nebenschlussauslösespule (310) zu steuern.

## Revendications

1. Appareil d'arrêt de réacteur nucléaire, comprenant :
un dispositif d'arrêt à disjoncteur distant (240) connecté de manière opérationnelle à un disjoncteur d'arrêt de réacteur (235) pour libérer une tige de commande (45) dans un coeur de réacteur nucléaire (20) ;
une source d'alimentation active (245) couplée électriquement pour alimenter le dispositif d'arrêt à disjoncteur distant ;
une source d'alimentation passive (305) couplée électriquement pour alimenter le dispositif d'arrêt à disjoncteur distant sur la base d'une perte de la source d'alimentation active ;
un dispositif d'arrêt à disjoncteur local connecté de manière opérationnelle au disjoncteur d'arrêt de réacteur, le disjoncteur d'arrêt de réacteur comprenant un capteur (135) pour déclencher le dispositif d'arrêt à disjoncteur local lors de la détection d'une condition prédéfinie ; et
un premier dispositif logique (320) comprenant une première borne couplée électriquement au dispositif d'arrêt à disjoncteur distant, et une seconde borne couplée électriquement à la fois à la source d'alimentation active et à la source d'alimentation passive.

2. Appareil d'arrêt de réacteur nucléaire selon la revendication 1, dans lequel la source d'alimentation passive (305) comprend au moins un condensateur ou une batterie.

3. Dispositif d'arrêt de réacteur nucléaire selon la revendication 1, dans lequel le dispositif d'arrêt à disjoncteur distant (240) comprend une bobine d'arrêt à dérivation (310).

4. Dispositif d'arrêt de réacteur nucléaire selon la revendication 1, dans lequel le dispositif d'arrêt à disjoncteur local comprend un ensemble d'arrêt à sous-tension.

5. Dispositif d'arrêt de réacteur nucléaire selon la revendication 1, dans lequel le dispositif logique est couplé en communication à un système de protection de réacteur (145).

6. Dispositif d'arrêt de réacteur nucléaire selon la revendication 1, comprenant en outre :
un second dispositif logique, comprenant :
une première borne couplée électriquement au dispositif d'arrêt à disjoncteur distant(240), et
une seconde borne couplée électriquement à la source d'alimentation passive (305).

7. Appareil d'arrêt de réacteur nucléaire selon la revendication 6, dans lequel le premier dispositif logique (320) et le second dispositif logique sont couplés en communication à un système de protection de réacteur (145).

8. Dispositif d'arrêt de réacteur nucléaire selon la revendication 7, comprenant en outre :
une première diode couplée électriquement entre la source d'alimentation active (245) et le dispositif d'arrêt à disjoncteur distant ; et
une seconde diode couplée électriquement entre la source d'alimentation passive (305) et le dispositif d'arrêt à disjoncteur distant.

9. Dispositif d'arrêt de réacteur nucléaire selon la revendication 1, dans lequel la condition prédéfinie comprend une condition de perte de tension.

10. Système de coupure de réacteur nucléaire selon la revendication 3, dans lequel la source d'alimentation passive (305) comprend un condensateur couplé électriquement à la bobine d'arrêt en dérivation (310).

11. Système de coupure de réacteur nucléaire selon la revendication 10, dans lequel le condensateur est couplé électriquement à une seconde source d'alimentation (325a) par l'intermédiaire d'une première diode (315a), et est couplé électriquement à la bobine d'arrêt en dérivation (310) par l'intermédiaire d'une seconde diode (315b).

12. Système de coupure de réacteur nucléaire selon la revendication 11, dans lequel la seconde source d'alimentation (325a) est configurée pour charger le condensateur pendant un état de fonctionnement normal.

13. Système de coupure de réacteur nucléaire selon la revendication 11, dans lequel la seconde source d'alimentation (325a) est configurée pour charger au compte-gouttes le condensateur pendant un état de veille.

14. Système de coupure de réacteur nucléaire selon la revendication 11, comprenant en outre un premier ensemble constitué d'un ou plusieurs contacts couplés électriquement entre la seconde diode (315b) et la bobine d'arrêt en dérivation (310) afin de commander au moins l'un parmi un déchargement ou un chargement du condensateur dans la bobine d'arrêt en dérivation.

15. Système de coupure de réacteur nucléaire selon la revendication 14, comprenant en outre un second ensemble constitué d'un ou plusieurs contacts couplés électriquement entre la première source d'alimentation et le condensateur pour commander au moins l'un parmi un déchargement ou un chargement du condensateur dans la bobine d'arrêt en dérivation (310).
